# EUROPEAN PATENT SPECIFICATION

(11) **EP 2 857 363 B1**
(45) Date of publication and mention of the grant of the patent: **09.09.2020**
(21) Application number: 12877842.0
(22) Date of filing: 30.05.2012
(51) Int. Cl.: C03B 5/42, F27D 1/04, F27D 1/10

(54) **CROWN STRUCTURE**
KRONENSTRUKTUR
STRUCTURE EN COURONNE

(43) Date of publication of application: 08.04.2015
(73) Proprietor: AGC Ceramics Co., Ltd., Tokyo, 108-0014 (JP)
(72) Inventor: ONO Yasushi, Tokyo 108-0014 (JP); KITANO Masami, Tokyo 108-0014 (JP); NANBA Masakazu, Tokyo 108-0014 (JP); WATANABE Ken, Tokyo 108-0014 (JP); KATOUDA Ippei, Tokyo 108-0014 (JP)
(74) Representative: Müller-Boré & Partner Patentanwälte PartG mbB
(86) International application number: PCT/JP2012/063907
(87) International publication number: WO 2013/179409

(56) References cited:
- WO-A1-02/08128
- DE-A1- 3 714 752
- JP-A- S6 042 590
- JP-A- 2003 261 335
- US-A- 1 686 761
- US-A- 1 733 664
- US-A- 2 139 172
- US-A- 2 961 978
- US-A- 3 948 193

## Description

The present invention relates to a crown structure used for a glass melting furnace, and so on, and in particular to a vault-shaped crown structure in which a gas leakage blocking layer including heat-insulating blocks is provided at an upper layer of refractory blocks.

In a glass melting furnace, an inside of the furnace becomes very high-temperature to melt a glass, and therefore, a furnace wall, a ceiling, and so on are made up of refractory bricks having resistance to an in-furnace temperature at an inner surface side, further, a heat-insulating structure is provided at an outer layer so as no to release the heat in the furnace toward outside.

For example, there is a crown structure of a glass melter in which an upper structure of a melting layer is constructed by taper-shaped dense silica bricks into a crown shape, and the dense silica bricks are stacked for one layer to two layers at an upper part of the silica bricks as a hermetic sealing structure to prevent gas leakage, the stacked bricks are joined by a silicate adhesive, and further, a heat-insulating layer (for example, heat-insulating bricks, ceramic fibers, and so on) constructed by a publicly-known method is provided at an upper part thereof. Such the crown structure is known (for example, refer to Patent Document 1).

Besides, in recent years, it is desired to reduce environmental load, and further, a melting temperature tends to increase resulting from specialization of a glass to be melted, and therefore, an oxygen combustion glass melting furnace which is excellent in environmental load increases. In the oxygen combustion glass melting furnace, a flame temperature increases, and the upper structure of a glass melting chamber is exposed to a higher temperature.

Here, the oxygen combustion means combustion using oxygen or gas whose oxygen concentration is raised as combustion supporting gas of a burner, and there are a lot of excellent advantages such as improvement in combustion efficiency, increase in the flame temperature, reduction in an amount of exhaust gas, reduction in nitrogen oxide, and reduction in carbon dioxide compared to normal air combustion.

In the glass melting furnace such as the oxygen combustion to be very high temperature, when the above-stated stacked structure of the silica heat-insulating castable refractory is applied, the in-furnace temperature becomes a high-temperature of around 1650°C, and therefore, there are problems such that an enough operating life cannot be obtained because creep deformation and reaction damages on silica occur, and a new heat-insulating furnace wall structure of a crown ceiling has been required.

According to severity of operation, a change into a crown structure using blocks made of electrocast bricks (hereinafter, abbreviated as electrocast brick blocks) instead of the silica bricks which have problems in heat resistance, corrosion resistance, and so on has been studied. Here, as a material of the electrocast brick block, it is appropriately selected from ones with refractoriness such as alumina, alumina-zirconia-silica, and zirconia, and the electrocast brick block is able to be stably used under a high-temperature at around 1650°C. Further, in the crown structure using the electrocast brick blocks, it is necessary to increase heat-insulating property and to reduce a radiation heat loss by stacking refractory bricks, heat-insulating bricks, ceramic fibers at an upper part thereof.

However, a specific gravity of these electrocast brick blocks is generally larger than that of the silica bricks, and when the silica bricks are just replaced by the electrocast brick blocks, a mass of a whole of the crown structure increases, and it becomes necessary to strengthen a structure supporting the ceiling structure. Accordingly, there is a problem in which it becomes disadvantageous in prime cost. Further, when the heat-insulating property of the crown structure is insufficient, an efficiency of thermal energy of the whole of the glass melting furnace is lowered, and it becomes disadvantageous in prime cost. Therefore, points of views of lightness in weight and heat-insulating property in addition to the heat resistance, corrosion resistance become important as the crown structure capable of corresponding to the high-temperature operation such as the oxygen combustion.
US 1,686,761 A describes a masonry arc for high-temperature use. US 1,733,664 A describes a refractory curved arch.

Patent Document 1: WO 2002/08128 A1

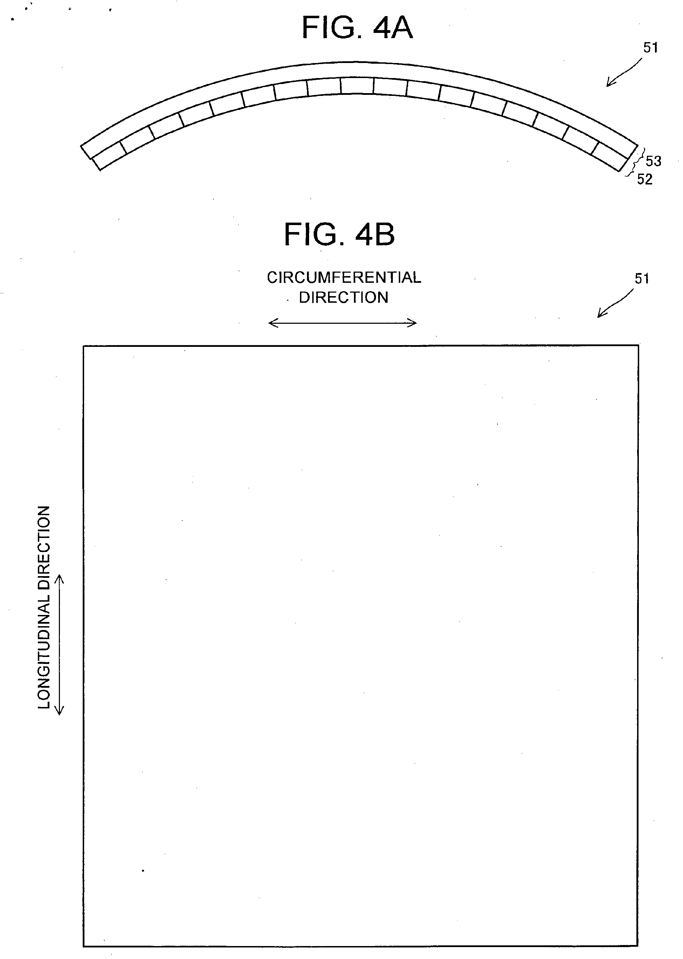

In general, a crown structure is formed into a shape as illustrated in Fig. 4A and Fig. 4B, so-called a vault shape. The crown structure in a glass melting furnace is made up of a corrosion resistant layer 52 in which refractory blocks and so on are assembled at a furnace inner surface side, and further, a heat-insulating layer 53 at an outer surface of the corrosion resistant layer 52. Here, Fig. 4A is a front view when a conventional crown structure is seen from a longitudinal direction, and Fig. 4B is a plan view when the crown structure is seen from upside.

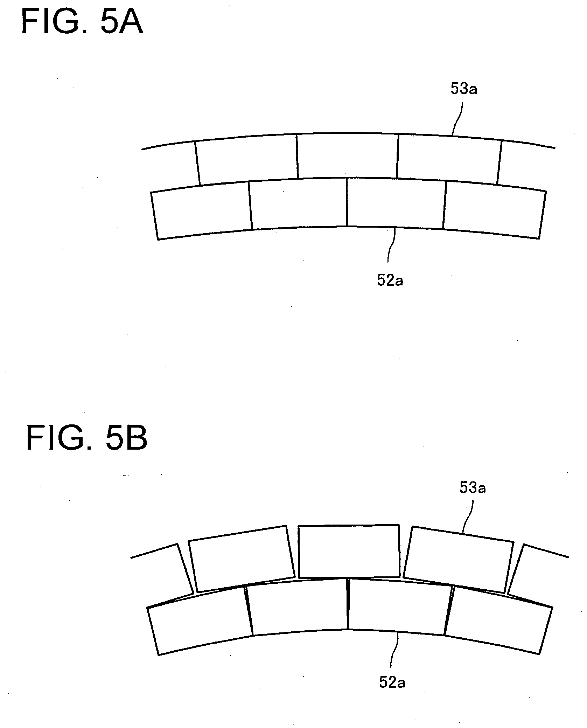

However, the refractory blocks made into the crown structure are well-ordered when they are assembled at a cold condition time, but they rise toward an upper part by expansion at a heat-up time. Namely, Fig. 5A and Fig. 5B are views enlargedly illustrating a top part of the crown structure in Fig. 4A, where Fig. 5A is a schematic view before operation (before the heat-up) of the glass melting furnace, and Fig. 5B is a schematic view after operation (after the heat-up). As illustrated here, respective blocks 52a, 53a making up the corrosion resistant layer 52 and the heat-insulating layer 53 expand after the operation because they are heated to high-temperature, rise toward the upper part, and gaps are generated at joint parts of the refractory blocks 52a. Moreover, further large gaps are generated between the heat-insulating blocks 53a and so on stacked at an upper part thereof caused by the rising of the refractory blocks 52a.

Note that there are cross arm braces (not-illustrated) of loads at both ends of the refractory block 52a to adjust such that joints of the refractory blocks 52a do not open after the heat-up. However, also in that case, there is a temperature difference in a thickness direction at both the refractory blocks 52a and the heat-insulating blocks 53a, and therefore, the joints of the refractory blocks 52a, in particular, the joints of the heat-insulating blocks 53a open resulting from a difference in thermal expansion amounts in the thickness direction and a difference in thermal expansion ratios.

As stated above, when there are gaps between respective blocks, volatile gas which comes from glass passes through the gaps between blocks, and scatters out of the furnace because an inside of the melting furnace is generally a positive pressure. At this time, a ceramic fiber layer which is often provided at an outermost layer of the crown structure has air permeability, and therefore, there is no function to prevent the scattering of the gas toward outside.

As stated above, if in-furnace gas leaks toward outside of the furnace, there are problems such that the heat-insulating bricks and the ceramic fibers are eroded caused by a contact with the gas and their operation lives become short, an energy saving effect cannot be obtained because a radiated heat quantity increases, an environmental load increases.

Therefore, an object of the present invention is to provide a crown structure capable of improving a conventional art, and effectively preventing leakage of in-furnace gas in a glass melting furnace. Further, another object of the present invention is to provide a crown structure excellent in lightness in weight and heat-insulating property, and suitable for a high-temperature operation such as oxygen combustion while effectively preventing the leakage of the in-furnace gas.

A crown structure according to the present invention is characterized in that including: a corrosion resistant layer aligning and disposing plural pieces of refractory blocks to be a vault shape at a furnace inner side of a glass melting furnace; and a gas leakage blocking layer including plural pieces of heat-insulating blocks disposed with gaps between them and disposed at an upper layer of the refractory blocks of the corrosion resistant layer, a dense castable refractory provided at the gaps between the heat-insulating blocks and provided to cover at least joints of the refractory blocks, and a lightweight heat-insulating castable refractory provided at the gaps between the heat-insulating blocks, stacked on the dense castable refractory and provided to embed a space formed by the heat-insulating blocks and the dense castable refractory, wherein the dense castable refractory has a bulk specific gravity of 3.0 or more at 110°C, wherein the lightweight heat-insulating castable refractory has a bulk specific gravity of 1.2 or less at 110°C and a thermal conductivity at 1000°C of 0.7 W/(m·K) or less.

In the gas leakage blocking layer, it is preferable that the heat-insulating block has a planar shape smaller than the refractory block. It is further preferable that the heat-insulating block is light in weight (for example, a bulk specific gravity is 1.2 or less), and is excellent in heat-insulating property (for example, a thermal conductivity is 0.7 W/(m·K) or less).

According to the present invention, it is possible to effectively prevent the leakage of in-furnace gas at a glass melting furnace. The leakage of the in-furnace gas is prevented, and thereby, it is possible to keep an operation life of the crown structure long, and to suppress a radiation heat loss, to enable energy saving and reduction in weight of a ceiling structure, further, not to increase an environmental load by preventing flow out of volatile gas toward outside of the furnace.

Besides, according to the present invention, the gas leakage blocking layer is made up of heat-insulating blocks, a heat-insulating castable refractory, and a dense castable refractory which is directly responsible for a function blocking the gas leakage. Therefore, the heat-insulating blocks and the heat-insulating castable refractory are made of materials which are light in weight (for example, a bulk specific gravity is 1.2 or less) and excellent in a heat-insulating property (for example, a thermal conductivity is 0.7 W/(m·K) or less), and thereby, it is possible to provide a crown structure excellent in lightness in weight and heat-insulating property in addition to a gas leakage resistant property, and it is possible to provide a glass melting furnace suitable for a high temperature operation such as oxygen combustion owing to the glass melting furnace employing the crown structure.

Further, a space formed by the dense castable refractory and the heat-insulating blocks is embedded by the lightweight heat-insulating castable refractory, namely, the lightweight heat-insulating castable refractory is used to bond and form between the heat-insulating blocks, and therefore, it is possible to integrally make up the gas leakage blocking layer and it is excellent in air-tightness. The lightweight heat-insulating castable refractory is constructed in hot condition and on site, and thereby, the air-tightness can further be increased.
[Fig. 1A] A front view schematically illustrating a crown structure of the present invention.
[Fig. 1B] A plan view schematically illustrating the crown structure in Fig. 1A.
[Fig. 2A] A sectional view partially and enlargedly illustrating a top part of the crown structure according to an embodiment of the present invention from a longitudinal direction.
[Fig. 2B] A sectional view partially and enlargedly illustrating the top part of the crown structure in Fig. 2A from a circumferential direction.
[Fig. 3A] A sectional view partially and enlargedly illustrating a top part of a crown structure according to another embodiment of the present invention from a longitudinal direction.
[Fig. 3B] A sectional view partially and enlargedly illustrating the top part of the crown structure in Fig. 3A from a circumferential direction.
[Fig. 4A] A front view schematically illustrating a conventional crown structure.
[Fig. 4B] A plan view schematically illustrating the crown structure in Fig. 4A.
[Fig. 5A] A partial enlarged sectional view schematically illustrating a top part of the conventional crown structure before heat-up.
[Fig. 5B] A partial enlarged sectional view schematically illustrating the top part of the crown structure in Fig. 5A after the heat-up.

Hereinafter, a crown structure according to the present invention will be described with reference to the drawings.

### (First Embodiment)

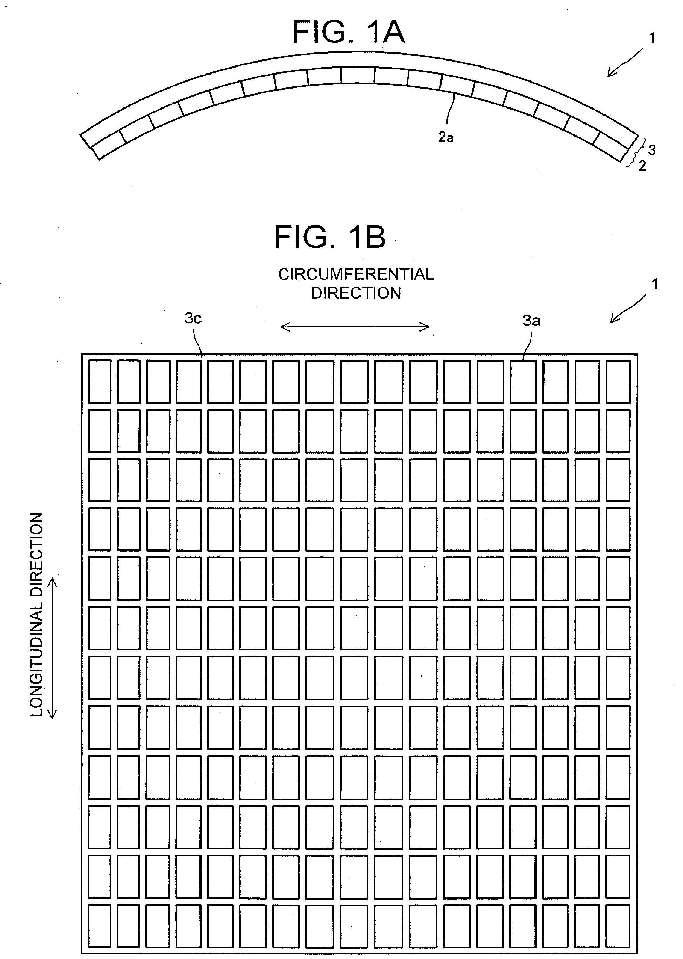

As stated above, a crown structure of the present invention includes: a corrosion resistant layer aligning and disposing plural pieces of refractory blocks to be a vault shape at a furnace inner side of a glass melting furnace; and a gas leakage blocking layer having a dense castable refractory provided to cover at least joints of the refractory blocks at an outer surface of the corrosion resistant layer. Specifically, as illustrated in Fig. 1A and Fig. 1B, it is a crown structure 1 made up of a corrosion resistant layer 2 formed into the vault shape and a gas leakage blocking layer 3 provided at an outer surface of the corrosion resistant layer 2.

Here, the vault shape is one formed by pushing out an arch shape in a horizontal direction, and it is so-called a semicylindrical shape. In the present description, a direction forming an arch (circular arc) in this vault shape is called as a circumferential direction, and a direction extending the arch shape in a horizontal direction is called as a longitudinal direction.

Here, the corrosion resistant layer 2 is made up by forming refractory blocks 2a into the vault shape. A publicly known refractory blocks having refractoriness and corrosion resistance for glass steam can be cited as the refractory blocks 2a to be used, and for example, refractory blocks made of materials such as silica, mullite, alumina, alumina-zirconia, alumina-zirconia-silica, zirconia can be cited. Note that in the present description, silica is used to mean that SiO₂ is a main component, and mullite and so on are used as a similar meaning. Note that the main component means one whose content (a total of Al₂O₃, ZrO₂, and SiO₂ in case of alumina-zirconia-silica) is 50 mass% or more when a component is represented by inner percentage. Incidentally, in the present description, all of the contents of a chemical composition in the refractory are represented by the inner percentage.

The refractory block 2a used here may be appropriately selected by operation conditions of a glass melting furnace to be applied, and in case of the glass melting furnace by the oxygen combustion as described in the background art, the electrocast brick block having high refractory temperature and corrosion resistance is preferable, and in particular, an alumina-zirconia electrocast brick block is preferable.

The corrosion resistant layer 2 is the vault shape, and therefore, it stands up for itself by the gravity to be integrally constituted. At this time, nothing particularly is to be provided between blocks, but a contact part between the blocks with each other is made to be smooth and adjacent blocks with each other are formed to be a corresponding shape so as not to largely open the gap.

Besides, the gas leakage blocking layer 3 is provided at the outer surface of the corrosion resistant layer 2, and includes the dense castable refractory provided to cover at least the joints of the refractory blocks 2a. Here, the dense castable refractory is provided to cover joint parts of the refractory blocks, and therefore, it is possible to suppress leakage of in-furnace gas from gaps of the joints. Besides, the gas leakage blocking layer is integrally and air-tightly formed at the outer surface of the corrosion resistant layer 2 by the dense castable refractory, and thereby, the gaps between the heat-insulating blocks are not largely opened by the rising of the refractory blocks toward upward resulting from the expansion thereof like the conventional heat-insulating layer. Accordingly, it is possible to effectively prevent the gas leakage and leakages of heat and a gas component in the furnace toward outside. Therefore, it is possible to reduce an energy cost, and to suppress the increase of the environmental load.

One of characteristics of the present invention exists in a point that functions of the gas leakage blocking layer is divided into a gas leakage blocking function and a heat-insulating function, and it is basically constituted such that the joint part is responsible for the gas leakage blocking function and the other parts are responsible for the heat-insulating function. Namely, the part of the dense castable refractory is a part which is responsible for the gas leakage blocking function, and the part made up of the heat-insulating material such as heat resistant blocks is a part which is responsible for the heat-insulating function. Hereinafter, this point is further described by using concrete modes.

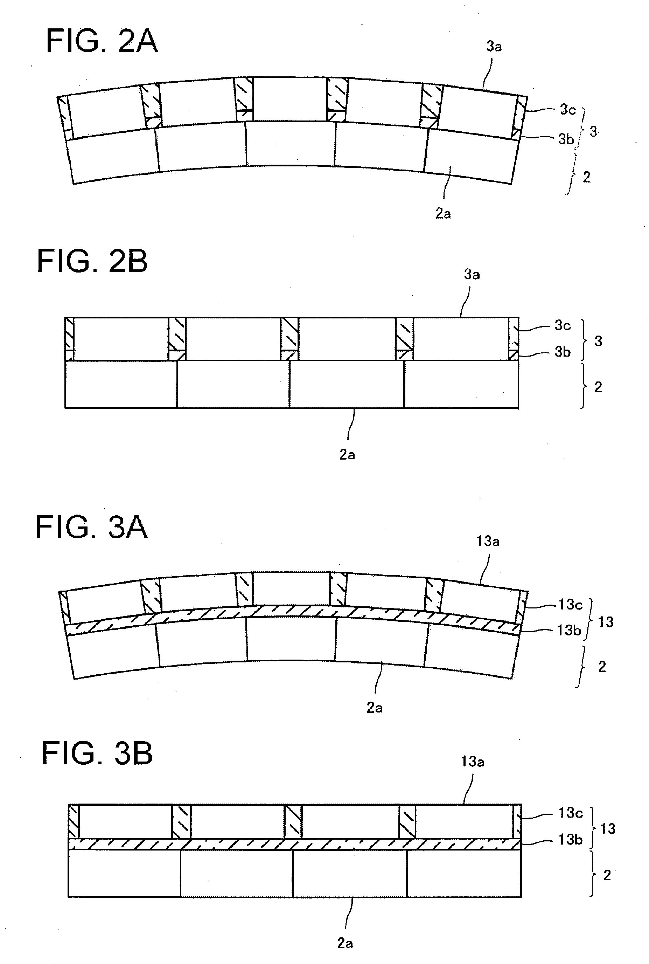

An example of a concrete constitution of the gas leakage blocking layer 3 is illustrated in Fig. 2A and Fig. 2B. Fig. 2A and Fig. 2B are both sectional views partially and enlargedly illustrating a top part of the crown structure 1 in Figs. 1. Here, Fig. 2A is the sectional view seen from a longitudinal direction, and Fig. 2B is the sectional view seen from a circumferential direction.

The gas leakage blocking layer 3 is made up of heat-insulating blocks 3a disposed at respective outer surfaces of the refractory blocks 2a and each having a planar shape which is smaller than the refractory block 2a, a dense castable refractory 3b provided at gaps between the heat-insulating blocks 3a, and a lightweight heat-insulating castable refractory 3c provided at the gaps between the heat-insulating blocks 3a and stacked at an upper part of the dense castable refractory 3b. Here, the heat-insulating blocks 3a form the gas leakage blocking layer 3 by the dense castable refractory 3b and the lightweight heat-insulating castable refractory 3c provided to bond the heat-insulating blocks 3a with eath other. A whole of the gas leakage blocking layer 3 which is formed as stated above is integrally formed, and therefore, it is excellent in air-tightness.

The heat-insulating block 3a used here is made of a lightweight heat-insulating castable refractory. A bulk specific gravity at 110°C of this lightweight heat-insulating castable refractory is preferably 1.2 or less, and more preferably 1.1 or less. Besides, a thermal conductivity at 1000°C of the lightweight heat-insulating castable refractory is preferably 0.7 W/(m·K) or less, and more preferably 0.6 W/(m·K) or less. Note that in the present description, the castable refractory is one obtained by constructing a castable refractory powder composition. As the castable refractory powder composition, it is not particularly limited, but one containing aggregate, binder, and refractory fines can be cited as a basic one.

As the lightweight heat-insulating castable refractory as stated above, alumina, zirconia, alumina-zirconia, alumina-zirconia-silica, and so on can be used, but alumina-zirconia is preferable in points of the heat resistance and the corrosion resistance to the glass. As alumina-zirconia, a content in which Al₂O₃ and ZrO₂ are mixed is 80 mass% or more in inner percentage is preferable, and a refractory containing 85 mass% or more is more preferable.

As the aggregate of the lightweight heat-insulating castable refractory, hollow particles of alumina, alumina-zirconia are added, and thereby, the weight is further reduced, and in particular, the hollow particles which is alumina-zirconia and contains ZrO₂ for 35 mass% or less in the refractory can be suitably used. Note that as the binder of the lightweight heat-insulating castable refractory, well-known alumina cement, and so on can be suitably used.

The heat-insulating block 3a increases a heat-insulating effect of the crown structure, and the heat in the furnace is thereby prevented from going outside, and therefore, energy loss can be reduced. Besides, a mass of the heat-insulating block 3a is relatively light among heat-insulating materials, and it is possible to use this heat-insulating block 3a at a major part of parts other than the joints (parts where a possibility of occurrence of gas leakage is low) of the refractory blocks. If the gas leakage blocking layer 3 is made of a material such as the heat-insulating block 3a whose bulk density is small and thermal conductivity is low, it is possible to reduce the mass of the ceiling in itself, and the mass to be supported becomes light when the furnace is constructed. Therefore, it is possible to reduce a manufacturing cost of the furnace.

In the present embodiment, the heat-insulating block 3a may be provided at the parts other than the joints of the refractory blocks as stated above, and a manufacturing method and a disposition method are not particularly limited as long as a disposition relationship is satisfied. Namely, the heat-insulating block 3a is preferably made of the castable refractory, it is casting (pre-cast) into a block state and dried in advance, it is mounted and fixed on the refractory blocks formed into the vault shape, otherwise, it may be formed afterward to be a desired position and shape on the refractory blocks formed into the vault shape by spray-gunning , casting, troweling , stamping, and so on.

The heat-insulating block 3a used here can be appropriately set to be a desired size in accordance with conditions such as a size of the refractory block to be used and a way how the heat-insulating block 3a is disposed at the outer surface of the refractory block. Besides, in Fig. 2A and Fig. 2B, the heat-insulating block 3a is represented as one thing, but this may be divided into plural to be disposed, and they may be regarded as one piece of the heat-insulating block 3a as a whole.

Besides, the dense castable refractory 3b is made of a castable refractory which constructs a dense structure, and surely blocks the gas leakage. A bulk specific gravity of the dense castable refractory 3b is 3.0 or more at 110°C, and more preferably 3.1 or more.

As the dense castable refractory as stated above, alumina, zirconia, alumina-zirconia, alumina-zirconia-silica, and so on can be used. As the refractory, densification thereof is desired to be higher to completely block the gas leakage. Therefore, a well-known low cement castable made of alumina and alumina-zirconia is used and a water quantity to be added is preferably 6 mass% or less in outer percentage relative to the low cement castable, more preferably 5.5 mass% or less, to thereby form the dense gas leakage blocking layer with high specific gravity. Further, a component which is strong for a reaction with glass steam is preferable, and in this case, alumina is used, and a refractory which has an Al₂O₃ content for 85 mass% or more, more preferably 90 mass% or more in the refractory is used.

Besides, as the lightweight heat-insulating castable refractory 3c, the bulk specific gravity at 110°C is 1.2 or less, and more preferably 1.1 or less. Besides, the thermal conductivity at 1000°C of this lightweight heat-insulating castable refractory is 0.7 W/(m·K) or less, and more preferably 0.6 W/(m·K) or less.

As the lightweight heat-insulating castable refractory, alumina, zirconia, alumina-zirconia, alumina-zirconia-silica, and so on can be used, but alumina-zirconia is preferable from points of the heat resistance and the corrosion resistance to the glass. As alumina-zirconia, one having 80 mass% or more in inner percentage of the content in which Al₂O₃ and ZrO₂ are mixed is preferable, and 85 mass% or more is more preferable.

As the aggregate of this lightweight heat-insulating castable refractory, hollow particles of alumina, alumina-zirconia are added, and thereby, further lightness in weight can be obtained, and in particular, the hollow particles which are alumina-zirconia and containing ZrO₂ for 35 mass% or less in the refractory is suitably used. Note that as a binder of the lightweight heat-insulating castable refractory, well-known alumina cement and so on can be suitably used.

The lightweight heat-insulating castable refractory 3c and the lightweight heat-insulating castable refractory making up the heat-insulating block 3a may have different compositions, but if they are the same composition, it is preferable in points in which heat characteristics are matched, they become easy to manufacture, and so on.

Here, the heat-insulating blocks 3a with each other are further bonded by the lightweight heat-insulating castable refractory so as to embed a space formed between the dense castable refractory 3b and the heat-insulating blocks 3a fixed thereby, to secure the air-tightness and integrality of the gas leakage blocking layer 3. Note that the specific gravity and the thermal conductivity of the lightweight heat-insulating castable refractory 3c slightly increase than the heat-insulating block 3a depending on field construction conditions, in particular, patching in hot and cold conditions, and the water quantity is set to be low in troweling construction, but there is no problem.

A thickness of the dense castable refractory 3b formed here is preferably 3 cm to 8 cm. When the thickness is 3 cm or more, the enough gas leakage blocking property can be secured, and when it is 8 cm or less, the mass of the ceiling structure in itself can be reduced without making it unnecessarily heavy.

Note that the crown structure 1 has a basic structure in which the refractory blocks 2a stand up for themselves by the gravity in an arch structure, and though it is not illustrated, it is constituted by block receiving structures provided at end parts of the crown structure 1 supporting a whole of the crown structure.

Next, a manufacturing method of the crown structure of the first embodiment is described. At first, as illustrated in Fig. 1A, the refractory blocks 2a are assembled into the vault shape to construct the corrosion resistant layer 2 to be a base of the crown structure.

Next, the heat-insulating blocks 3a are disposed at the outer surface so as not to cover the joints of the refractory blocks 2a. At this time, the heat-insulating blocks 3a may be fixed at surfaces of the refractory blocks 2a by mortar and so on, or though it is not illustrated, the heat-insulating blocks 3a may be cumulated in sequence from downward toward upward while enabling to determine a disposed position also at an inclined part by using spacer blocks each having a gap size between the heat-insulating blocks 3a and made up of a refractory brick and so on.

Besides, when the heat-insulating block 3a is formed by the spray-gunning , the casting, the troweling , the stamping, and so on, the heat-insulating blocks 3a may be formed at the surfaces of the refractory blocks 2a so that the heat-insulating blocks 3a are disposed at desired positions.

Next, the dense castable refractory 3b and the lightweight heat-insulting castable refractory 3c are stacked in this sequence at the gap between the heat-insulating blocks 3a to bond the heat-insulating blocks 3a with each other. At this time, any of the castable refractories may be formed by embedding the gap between the heat-insulating blocks 3a by performing the spray-gunning , the casting, the troweling , the stamping, and so on of the powder composition forming the castable refractory. As for these castable refractories, at first the dense castable refractory 3b being a lower layer is constructed, and after 3b is solidified, the next lightweight heat-insulating castable refractory 3c is formed.

Here, the formations of the dense castable refractory 3b and the lightweight heat-insulating castable refractory 3c are possible by either a cold construction or a hot construction, but the hot construction is preferable to make an effect of expansion of the refractory block and so on by heating small. The hot construction is performed under a state in which the refractory blocks 2a are enough thermal-expanded, and the gaps between the heat-insulating blocks 3a are largely opened, and therefore, it is preferable because thermal stress and cracks are difficult to be generated at the gas leakage blocking layer 3 during operation of the glass melting furnace. Note that when the hot construction is performed, design have to be performed in fully consideration of characteristics change because the specific gravity and the thermal conductivity change from the cold construction.

Note that actually, the formations of the dense castable refractory 3b and the lightweight heat-insulating castable refractory 3c are performed by human hands, and therefore, working efficiency and safety deteriorate if everything is performed in hot condition, and therefore, a part thereof may be performed by the cold construction, and the remaining part may be performed by the hot construction.

For example, (as illustrated in Fig. 2A), as for the dense castable refractory 3b and the lightweight heat-insulating castable refractory 3c formed at the gaps in the circumferential direction, the respective castable refractories are casted or trowel-coated in the cold condition, and (as illustrated in Fig. 2B), as for the dense castable refractory 3b and the lightweight heat-insulating castable refractory 3c formed at the gaps in the longitudinal direction, they are constructed after the heat-up of the glass melting furnace.

As for the construction after the heat-up, the casting is preferable because the furnace wall is in high-temperature, the outer surface of the corrosion resistant layer becomes approximately 500°C, and it becomes a high-temperature operation. Besides, it is preferable to be formed to have a predetermined thickness by being filled from a top part, and promptly spreading out owing to inclination by its own weight to be filled. After it becomes the predetermined thickness, it is heated up, and therefore, curing by the temperature increase proceeds naturally.

Note that in the circumferential direction, when the glass melting furnace is heated up, the effect by the expansion of the refractory blocks 2a is large, and therefore, it is preferable to construct the dense castable refractory 3b and the lightweight heat-insulating castable refractory 3c after the heat-up, in particular, as for the heat-insulating block 3a in a vicinity of a top part, for example, the gaps at both ends of the heat-insulating block at an uppermost part in the circumferential direction. It is possible to effectively relax the expansion of the refractory blocks 2a if the above-stated part is constructed by the casting, the troweling , patching, and so on after the heat-up.

Besides, in the longitudinal direction, when the glass melting furnace is heated up, it is more preferable to construct all of the gaps of the heat-insulating blocks 3a after the heat-up to relax the effect by the expansion of the refractory blocks 2a.

### (Second Embodiment)

Next, a second embodiment of the present invention is described. An overall constitution is similar to one described in Fig. 1A and Fig. 1B. Here, an embodiment including a gas leakage blocking layer 13 having a different constitution from the gas leakage blocking layer 3 illustrated in Fig. 2A and Fig. 2B is described with reference to Fig. 3A and Fig. 3B. Here, Fig. 3A and Fig. 3B are sectional views both partially and enlargedly illustrating the top part of the crown structure 1 in Fig. 1A and Fig. 1B. Here, Fig. 3A is the sectional view when it is seen from the longitudinal direction, and Fig. 3B is the sectional view when it is seen from the circumferential direction.

In this embodiment, a point in which a layer made up of a dense castable refractory 13b is formed at a whole of an outer surface of the refractory blocks 2a is different from the first embodiment. As stated above, a whole surface is covered with the dense castable refractory 13b, and thereby, a dense castable refractory 13b layer in itself is formed as an integral one, and a function to prevent the gas leakage can be surely obtained by a simple operation. Constructions of the dense castable refractory 13b and a lightweight heat-insulating castable refractory 13c formed here can be performed either by the cold construction or the hot construction as same as the first embodiment.

In particular, (as illustrated in Fig. 3A), when gaps in the circumferential direction are formed, the construction after the heat-up is preferable as for the gaps of the heat-insulating blocks 13a in the vicinity of the top part. Further, the dense castable refractory 13b at a lower part of the hot-constructed part of the heat-insulating block 13a is also hot-constructed, and thereby, it is possible to effectively relax the expansion.

Besides, (as illustrated in Fig. 3B), when gaps in the longitudinal direction are formed, it is preferable to construct all of the gaps of the heat-insulating blocks 13a after the heat-up. Further, the dense castable refractory 13b at a lower part of the hot-constructed part of 13a is also hot-constructed, and thereby, it is possible to effectively relax the expansion.

Here, a thickness of the dense castable refractory 13b layer is normally preferable to be approximately 3 cm to 8 cm from points of views of surely blocking the gas leakage and there is no need to unnecessarily increase the mass of the ceiling structure.

In this embodiment, the heat-insulating blocks 13a are each disposed with interval at an outer surface of the dense castable refractory 13b as same as the first embodiment. Further, the gaps between the heat-insulating blocks 13a are embedded by the lightweight heat-insulating castable refractory 13c to integrally form the heat-insulating blocks 13a.

At this time, the heat-insulating block 13a may be made thin compared to the first embodiment. This is because the dense castable refractory 13b layer is already provided as the gas leakage blocking layer 13, and therefore, the gas leakage blocking layer 13 is prevented from being made thick more than necessary.

As illustrated in the first embodiment and the second embodiment, the joint parts of the refractory blocks 2a are sealed by the dense castable refractories 3b, 13b as the gas leakage blocking layers 3, 13, and therefore, the gas leakage is effectively and surely prevented, and at the same time, the other parts are made of the lightweight heat-insulating castable refractories 3c, 13c as much as possible, and thereby, it is possible to reduce the mass of the ceiling structure compared to the conventional one while securing the heat insulating property. It is possible to reduce the energy loss, not to increase the environmental load, and to reduce a plant construction cost owing to the lightness in weight by the constitution as stated above.

Note that a heat-insulating layer may further be made of a lightweight heat-insulating castable refractory at an outer periphery of each of the gas leakage blocking layers 3, 13 formed as stated above, namely, on the gas leakage blocking layer. Here, the heat-insulating layer is made of the lightweight heat-insulating castable refractory, and thereby, it is possible not only to further improve the heat-insulating effect but also to more surely prevent the gas leakage.

As the lightweight heat-insulating castable refractory to form the heat-insulating layer, the lightweight heat-insulating castable refractories 3c, 13c used in the first and second embodiments may be used, but, the heat-insulating effect is obtained by the gas leakage blocking layer 3, and therefore, it may be made of a lightweight heat-insulating castable refractory whose heat-insulating property and thermal conductivity are lower. As the lightweight heat-insulating castable refractory used here, for example, the lightweight heat-insulating castable refractory which is alumina-silica, whose bulk specific gravity at 110°C of 0.6 or less is preferable, and 0.45 or less is more preferable, and whose thermal conductivity at 500°C of 0.2 W/(m·K) or less is preferable, and 0.16 W/(m·K) or less is more preferable, and so on can be cited. Besides, a compressive strength at 110°C dry of this lightweight heat-insulating castable refractory is preferably 0.2 MPa or more, and more preferably 0.3 MPa or more.

Note that the heat-insulating layer may be constituted by the heat-insulating bricks, ceramic fibers, and so on used in the conventional crown structure.

### [Examples]

Hereinafter, the crown structure of the present invention is described by examples (example 1, example 3) and a comparative example (example 2). Incidentally, the present invention is not limited to these examples.

### (Example 1)

At first, a furnace shape of the glass melting furnace, and a crown structure were set to be the following sizes.

| | |
|---|---|
| Furnace length: | approximately 10 m |
| Furnace width: | approximately 6 m |
| Crown radius: | approximately 6 m |
| Crown angle: | 60 degrees |

As illustrated in Fig. 1A and Fig. 1B, at first, the corrosion resistant layer 2 to be as an internal side of the furnace was constructed in the vault shape with the above-stated condition as having 21 pieces in the circumferential direction and 16 pieces in the longitudinal direction of alumina electrocast brick blocks (Al₂O₃: 95 mass%). Here, a block whose planar shape when an outer surface thereof was seen from upward was a rectangle with a longitudinal direction length of approximately 600 mm and a circumferential direction length of approximately 320 mm, and thickness was 250 mm was used as the electrocast brick block. Note that this electrocast brick block was to construct the vault shape, and therefore, a shape at a furnace inner surface side (bottom surface shape) was shorter in the circumferential direction length than the above-stated planar shape.

Next, the lightweight heat-insulating castable refractory was casted to be formed to be the heat-insulating block 3a having a planar shape which was a size smaller than the electrocast brick block, it was dried at 110°C to obtain the heat-insulating block 3a having the longitudinal direction length of approximately 450 mm, the circumferential direction length of approximately 206 mm, and a height of 163 mm. Note that the lightweight heat-insulating castable refractory used here was alumina-zirconia (Al₂O₃: 83 mass%, ZrO₂: 6 mass%), whose bulk specific gravity was 1.0 at 110°C, and thermal conductivity at 1000°C was 0.54 W/(m·K).

The obtained heat-insulating blocks 3a were disposed at the outer surface of the electrocast brick blocks under a room temperature state so as not to cover joints of the electrocast brick blocks. Namely, they were disposed so that gaps of approximately 150 mm and approximately 114 mm were respectively formed in the longitudinal direction and in the circumferential direction.

At this time, the heat-insulating blocks 3a were cumulated from downward toward upward while sandwiching spacer blocks therebetween in the circumferential direction of the electrocast brick blocks in the vault shape to enable the above-stated disposition. The heat-insulating blocks 3a at a lowermost part were supported by a structure at outside of the furnace. Note that the spacer blocks were removed before the heat-up.

Next, the gaps were embedded by the following operation for the gaps between the heat-insulating blocks 3a to form the gas leakage blocking layer 3. Note that materials used here were as described below.

As the lightweight heat-insulating castable refractory 3c, alumina-zirconia (Al₂O₃: 83 mass%, ZrO₂: 6 mass%) whose bulk specific gravity was 1.0 at 110°C, and thermal conductivity at 1000°C was 0.54 W/(m·K) was used.

As the dense castable refractory, a castable refractory of alumina-silica (Al₂O₃: 91 mass%, SiO₂: 7 mass%) and whose cement content was low (low cement castable) was used. A water quantity of around 5 mass% in outer percentage was added to the low cement castable powder composition to make a dense refractory with a bulk specific gravity of 3.19.

At first, in cold condition (25°C), (as illustrated in Fig. 2A) the construction of the joint parts in the circumferential direction was performed as follows. The dense castable refractory was casted into the gaps between the heat-insulating blocks 3a in the circumferential direction to be a height of 40 mm. Further, after the dense castable refractory obtains shape-retainability, the lightweight heat-insulating castable refractory was casted to be a height of 123 mm to construct the castable refractory at the gaps between the heat-insulating blocks in the circumferential direction, and the heat-insulating blocks 3a were integrated in the circumferential direction. Note that the gaps at both ends of the heat-insulating block 3a at the uppermost part were constructed after the heat-up of the furnace.

As stated above, the gas leakage blocking layer with a thickness of 163 mm was formed at the upper part of the corrosion resistant layer 2 to obtain the heat-insulating furnace wall structure of the crown ceiling. Further, heat-insulating bricks (heat resistant temperature: 1400°C) were stacked for a thickness of 65 mm, and ceramic fibers (heat resistant temperature: 1260°C) were stacked for a thickness of 100 mm at an upper part in this sequence to be a total thickness of 165 mm, and they were heat-insulation constructed.

Next, the in-furnace temperature was heated up to 1600°C while protecting the gaps between the heat-insulating blocks in the longitudinal direction by heat-insulating fibers and so on, and the electrocast brick blocks at the corrosion resistant layer were made to be thermal expansion displaced. After the electrocast brick blocks were thermally expanded enough, the hot-construction of the gaps between the heat-insulating blocks in the longitudinal direction (illustrated in Fig. 2B) was performed at a temperature as it was.

The dense castable refractory was casted in hot condition at the outer surface of the corrosion resistant layer 2 which was heated to a high-temperature of approximately 500°C to have a thickness of 40 mm. The dense castable refractory flowed slowly toward a lower direction (circumferential direction) from an upper part at the gaps in the longitudinal direction while bubbling water vapor, and the thickness of the dense castable refractory 3b was able to be formed with high accuracy.

Next, the lightweight heat-insulating castable refractory was stamping-constructed in hot condition to have the thickness of 123 mm on the dense castable refractory 3b formed in hot condition. The lightweight heat-insulating castable refractory was able to form the thickness of the castable refractory 3c which was light in weight and excellent in heat-insulating property with high accuracy as same as the dense castable refractory 3b.

As stated above, the gas leakage blocking layer with a thickness of 163 mm was formed at the upper part of the corrosion resistant layer 2 to obtain the heat-insulating furnace wall structure of the crown ceiling. Finally, heat-insulating bricks (heat resistant temperature: 1400°C) were stacked for a thickness of 65 mm, and ceramic fibers (heat resistant temperature: 1260°C) were stacked for a thickness of 100 mm thereon in this sequence to be a total thickness of 165 mm, and they were heat-insulation constructed.

As stated above, the layers of the castable refractories 3b, 3c between the heat-insulating blocks 3a were formed later to bond the heat-insulating blocks 3a with each other, and thereby, the gas leakage blocking layer 3 which was air-tightened and integrated could be formed.

### (Example 2)

As a conventional furnace wall structure with the same thickness, a furnace wall was formed in which alumina-silica bricks (Al₂O₃: 77 mass%, SiO₂: 18 mass%) with a heat resistant temperature of 1580°C were stacked for a thickness of 114 mm, JIS-A7 heat-insulating bricks with a heat resistant temperature of 1500°C were stacked for a thickness of 114 mm, and ceramic fiber blankets with a heat-insulating temperature of 1260°C were stacked for a thickness of 100 mm in this sequence on the electrocast brick blocks with a thickness of 250 mm.

### [Characteristics Evaluation]

A heat-insulating property of the example 1 was found by a one-dimensional steady-state heat calculation (calculation was performed while setting an in-furnace temperature, an out-furnace temperature as respectively 1600°C, 25°C, and an emittance of a surface as 0.9). Radiation heat losses were respectively 1167 W/m², 1256 W/m², and surface temperatures were approximately 94°C, 98°C at a heat-insulating block part and at a heat-insulating block gap part, and a large energy saving effect was obtained compared to the radiation heat loss of 1418 W/m², the surface temperature of 105°C of the conventional furnace wall structure with the same thickness (example 2) obtained by the similar calculation.

The masses of the gas leakage blocking layer of the example 1 at the heat-insulating block part and at the heat-insulating block gap part were respectively 218 kg/m², 306 kg/m², and a large reduction in weight was enabled compared to the mass of the conventional furnace wall structure with the same thickness (the corresponding heat-insulating layer of the example 2) of 374 kg/m² when it was compared by a unit area.

Further, in the conventional furnace wall structure in which the refractory bricks, the heat-insulating bricks, and the ceramic fibers were stacked, bricks each having a standard brick shape (65 mm × 114 mm × 230 mm) size were cumulated without using mortar to construct the furnace, and therefore, when the melting furnace expanded under high-temperature, it was possible to relax the thermal expansion by moving for some extent, but on the other hand, gaps such as ones in Fig. 5B illustrating a state of one layer were generated at plural layers, and therefore, these gaps form a passage of the gas leakage in the furnace wall in the example 2. On the other hand, in the gas leakage blocking layer of the example 1 according to the present invention, the gas leakage from the joints of the electrocast brick blocks was blocked by integrating the dense castable refractory excellent in the corrosion resistance and the lightweight heat-insulating castable refractory excellent in the heat-insulating property, so the gas leakage in the furnace could be blocked, and it was excellent in the energy saving property and in countermeasure for the corrosion by the gas leakage.

### (Example 3)

A crown structure in which a lightweight heat-insulating castable refractory with a heat resistance of 1200°C was formed in stead of the other heat-insulating bricks and the ceramic fibers provided on the gas leakage blocking layer 3 in the example 1 was manufactured. Specifically, it was manufactured according to the following procedure.

The assembling of the electrocast brick blocks, the disposition of the heat-insulating blocks 3a, and (as illustrated in Fig. 2A), the dense castable refractory 3b and the lightweight heat-insulating castable refractory 3c at the gaps in the circumferential direction were constructed in cold condition by the same operation as the example 1. Note that the height of the heat-insulating blocks was changed into 195 mm, the thickness of the dense castable refractory was changed into 40 mm, and the thickness of the lightweight heat-insulating castable refractory was changed into 155 mm.

Next, the lightweight heat-insulating castable refractory with a heat resistance of 1200°C was trowel-coated on the heat-insulating blocks 3a integrally formed in the circumferential direction to be a layer with a thickness of 133 mm. Here, alumina-silica (Al₂O₃: 34 mass%, SiO₂: 45 mass%) whose bulk specific gravity was approximately 0.4, and the thermal conductivity at 500°C was 0.15 W/(m·K) was used as the lightweight heat-insulating castable refractory.

Further, after the in-furnace temperature was heated up to 1600°C, the dense castable refractory 3b and the lightweight heat-insulating castable refractory 3c were formed in hot condition at the gaps in the longitudinal direction according to the procedure of the example 1, and thereafter, finally, an ultralight heat-insulating material with the heat resistance of 1200°C was trowel-coated for 133 mm on the lightweight heat-insulating castable refractory 3c formed in the longitudinal direction.

In this example, the gas leakage blocking layer was made of a super heat-insulating material, and a heat-insulating layer in which the ultralight heat-insulating material with the heat resistance of 1200°C was integrated was further formed thereon. The integrated layers as stated above were formed in plural, and thereby, it was possible to obtain further heat-insulating property and the gas leakage blocking property.

Here, the thermal conductivity of the ultralight heat-insulating material was low equal to the ceramic fiber in the example 1, so the excellent heat-insulating property was obtained, and in addition, recent anxiety of cancer causing resulting from amorphous ceramic fiber could be resolved because it did not contain the ceramic fiber, and it had an excellent characteristic in which a whole of the heat-insulating furnace wall structure of the crown ceiling was able to be constructed in non-fiber.

As the heat-insulating property of the crown structure obtained in the example 3, the radiation heat loss was 1337 W/m² at the heat-insulating block part, the surface temperature was approximately 101.5°C, and excellent heat-insulating property could be obtained.

The crown structure of the present invention is suitable for an upper part furnace wall structure when the high-temperature process is performed such as the glass melting furnace. Besides, it is not limited to the glass melting furnace, but it can be widely used for an upper part furnace wall structure of a furnace performing a relatively low-temperature process.

## Claims

1. A crown structure (1), comprising:
a corrosion resistant layer (2) aligning and disposing plural pieces of refractory blocks (2a) to be a vault shape at a furnace inner side of a glass melting furnace; and
a gas leakage blocking layer (3, 13) including plural pieces of heat-insulating blocks (3a, 13a) disposed with gaps between them and disposed at an upper layer of the refractory blocks (2a) of the corrosion resistant layer (2), a dense castable refractory (3b, 13b) provided at the gaps between the heat-insulating blocks (3a, 13a) and provided to cover at least joints of the refractory blocks (2a), and a lightweight heat-insulating castable refractory (3c, 13c) provided at the gaps between the heat-insulating blocks (3a, 13a), stacked on the dense castable refractory (3b, 13b) and provided to embed a space formed by the heat-insulating blocks (3a, 13a) and the dense castable refractory (3b, 13b),
wherein the dense castable refractory (3b, 13b) has a bulk specific gravity of 3.0 or more at 110°C,
wherein the lightweight heat-insulating castable refractory (3c, 13c) has as bulk specific gravity of 1.2 or less at 110°C and a thermal conductivity at 1000°C of 0.7 W/(m·K) or less.

2. The crown structure (1) according to claim 1,
wherein the heat-insulating block (3a, 13a) has a planar shape smaller than the refractory block (2a), disposed at each outer surface of the refractory block (2a), and the dense refractory is formed by bonding between the heat-insulating blocks (3a, 13a).

3. The crown structure (1) according to claim 1,
wherein the dense castable refractory (3b, 13b) is formed at a whole surface of outer surfaces of the refractory blocks (2a), the plural heat-insulating blocks (3a, 13a) are disposed having a gap with each other on the dense castable refractory (3b, 13b) layer.

4. The crown structure (1) according to any one of claims 1 to 3,
wherein the refractory block (2a) is an electrocast brick block.

5. The crown structure (1) according to any one of claims 1 to 4,
wherein the heat-insulating block (3a, 13a) is a heat-insulating block (3a, 13a) obtained by molding the lightweight heat-insulating castable refractory in advance.

6. The crown structure (1) according to any one of claims 1 to 4,
wherein the heat-insulating block (3a, 13a) is a heat-insulating block (3a, 13a) formed by troweling the lightweight heat-insulating castable refractory at a surface of the refractory blocks (2a) or the dense castable refractory (3b, 13b) layer.

7. The crown structure (1) according to any one of claims 1 to 6,
wherein the heat-insulating block (3a, 13a) is made of an alumina-zirconia lightweight heat-insulating castable refractory.

8. The crown structure (1) according to claim 7,
wherein a bulk density at 110°C of the heat-insulating block (3a, 13a) is 1.2 or less and a thermal conductivity at 1000°C is 0.7 W/(m·K) or less.

9. The crown structure (1) according to any one of claims 1 to 8,
wherein the dense castable refractory (3b, 13b) is alumina containing Al₂O₃ for 85 mass% or more, and the bulk density at 110°C is 3.0 or more.

10. The crown structure (1) according to any one of claims 1 to 9,
wherein a heat-insulating layer made of a lightweight heat-insulating castable refractory (3c, 13c) of alumina-silica, whose bulk specific gravity at 110°C is 0.6 or less, and thermal conductivity at 500°C is 0.2 W/(m·K) or less is held at an upper layer of the gas leakage blocking layer (3, 13).

11. The crown structure (1) according to any one of claims 1 to 10,
wherein the heat-insulating blocks (3a, 13a) are disposed on a surface of the refractory blocks (2a) or the dense castable refractory (3b, 13b) and, among the lightweight heat-insulating castable refractories (3c, 13c), at gap parts of the heat-insulating blocks (3a, 13a) in a longitudinal direction and/or at gap parts at both ends of the heat-insulating block (3a, 13a) at an uppermost part in a circumferential direction, the lightweight heat-insulating castable refractory (3c, 13c) is constructed (hot construction) after the crown structure (1) is thermally expanded by heating the glass melting furnace.

## Patentansprüche

1. Kronenstruktur (1), umfassend:
eine korrosionsbeständige Schicht (2), die mehrere Stücke feuerfester Blöcke (2a) so ausrichtet und anordnet, dass sie die Form eines Gewölbes an der Ofeninnenseite eines Glasschmelzofens aufweisen; und
eine Gasleck-Sperrschicht (3, 13), einschließend mehrere Stücke von wärmeisolierenden Blöcken (3a, 13a), die mit Zwischenräumen zwischen ihnen angeordnet sind und an einer oberen Schicht der feuerfesten Blöcke (2a) der korrosionsbeständigen Schicht (2) angeordnet sind, wobei ein dichtes, gießbares, feuerfestes Material (3b, 13b), an den Zwischenräumen zwischen den wärmeisolierenden Blöcken (3a, 13a) bereitgestellt ist und welches bereitgestellt ist, zumindest Fugen der feuerfesten Blöcke (2a) abzudecken, und ein leichtes, wärmeisolierendes, gießbares, feuerfestes Material (3c, 13c), das an den Zwischenräumen zwischen den wärmeisolierenden Blöcken (3a) bereitgestellt, auf das dichte, gießbare, feuerfeste Material (3b, 13b) gestapelt und bereitgestellt ist, um einen Raum einzubetten, der durch die wärmeisolierenden Blöcke (3a, 13a) und das dichte, gießbare, feuerfeste Material (3b, 13b) gebildet wird,
wobei das dichte, gießbare, feuerfeste Material (3b, 13b) eine spezifische Schüttdichte von 3,0 oder mehr bei 110°C aufweist,
wobei das leichte, wärmeisolierende, gießbare, feuerfeste Material (3c, 13c) ein spezifisches Schüttgewicht von 1,2 oder weniger bei 110°C und eine Wärmeleitfähigkeit bei 1000°C von 0,7 W/(m·K) oder weniger aufweist.

2. Kronenstruktur (1) nach Anspruch 1,
wobei der wärmeisolierende Block (3a, 13a) eine planare Form aufweist, die kleiner als der feuerfeste Block (2a) ist und an jeder Außenfläche des feuerfesten Blocks (2a) angeordnet ist, und das dichte, feuerfeste Material durch Verbindung zwischen den wärmeisolierenden Blöcken (3a, 13a) gebildet ist.

3. Kronenstruktur (1) nach Anspruch 1,
wobei das dichte, gießbare, feuerfeste Material (3b, 13b) an einer gesamten Oberfläche der Außenflächen der feuerfesten Blöcke (2a) gebildet ist, wobei die mehreren wärmeisolierenden Blöcke (3a, 13a) mit einem Spalt zueinander auf der dichten, gießbaren, feuerfesten Schicht (3b, 13b) angeordnet sind.

4. Kronenstruktur (1) nach einem der Ansprüche 1 bis 3,
wobei der feuerfeste Block (2a) ein elektrogegossener Ziegelsteinblock ist.

5. Kronenstruktur (1) nach einem der Ansprüche 1 bis 4,
wobei der wärmeisolierende Block (3a, 13a) ein wärmeisolierender Block (3a, 13a) ist, der durch vorhergehendes Formen des leichten, wärmeisolierenden, gießbaren, feuerfesten Materials erhalten wurde.

6. Kronenstruktur (1) nach einem der Ansprüche 1 bis 4,
wobei der wärmeisolierende Block (3a, 13a) ein wärmeisolierender Block (3a, 13a) ist, der durch Glätten des leichten, wärmeisolierenden, gießbaren, feuerfesten Materials an einer Oberfläche der feuerfesten Blöcke (2a) oder der dichten, gießbaren, feuerfesten Schicht (3b, 13b) gebildet ist.

7. Kronenstruktur (1) nach einem der Ansprüche 1 bis 6,
wobei der wärmeisolierende Block (3a, 13a) aus einem leichten, wärmeisolierenden, gießbaren, feuerfesten Material aus Aluminiumoxid-Zirkoniumoxid hergestellt ist.

8. Kronenstruktur (1) nach Anspruch 7,
wobei die Schüttdichte des wärmeisolierenden Blocks (3a, 13a) bei 110°C 1,2 oder weniger und eine Wärmeleitfähigkeit bei 1000°C 0,7 W/(m·K) oder weniger beträgt.

9. Kronenstruktur (1) nach einem der Ansprüche 1 bis 8,
wobei das dichte, gießbare, feuerfeste Material (3b, 13b) Aluminiumoxid ist, das Al₂O₃ in 85 Massen% oder mehr enthält, und die Schüttdichte bei 110°C 3,0 oder mehr beträgt.

10. Kronenstruktur (1) nach einem der Ansprüche 1 bis 9,
wobei eine wärmeisolierende Schicht, die aus einem leichten, wärmeisolierenden, gießbaren, feuerfesten Material (3c, 13c) aus Aluminiumoxid-Siliciumdioxid hergestellt ist, dessen spezifisches Schüttgewicht bei 110°C 0,6 oder weniger und dessen Wärmeleitfähigkeit bei 500°C 0,2 W/(m·K) oder weniger beträgt, an einer oberen Schicht der Gasleck-Sperrschicht (3, 13) gehalten wird.

11. Kronenstruktur (1) nach einem der Ansprüche 1 bis 10,
wobei die wärmeisolierenden Blöcke (3a, 13a) auf einer Oberfläche der feuerfesten Blöcke (2a) oder des dichten, gießbaren, feuerfesten Materials (3b, 13b) und, unter den leichten, wärmeisolierenden, gießbaren, feuerfesten Materialien (3c, 13c), an Zwischenraumteilen der wärmeisolierenden Blöcke (3a, 13a) in Längsrichtung und/oder an Zwischenraumteilen an beiden Enden des wärmeisolierenden Blocks (3a, 13a) an einem in Umfangsrichtung obersten Teil angeordnet sind, wobei das leichte, wärmeisolierende, gießbare, feuerfeste Material (3c, 13c) aufgebaut wird (Heißkonstruktion), nachdem die Kronenstruktur (1) durch Beheizen des Glasschmelzofens thermisch expandiert ist.

## Revendications

1. Structure en couronne (1) comprenant :
une couche (2) résistante à la corrosion alignant et disposant plusieurs pièces de blocs réfractaires (2a) pour être en forme de voûte sur un côté intérieur de four d'un four de fusion de verre ; et
une couche (3, 13) de blocage de fuites de gaz comprenant plusieurs pièces de blocs thermo-isolants (3a, 13a) disposés avec des espaces entre eux et disposés au niveau d'une couche supérieure des blocs réfractaires (2a) de la couche (2) résistante à la corrosion, un réfractaire coulable dense (3b, 13b) prévu au niveau des espaces entre les blocs thermo-isolants (3a, 13a) et prévu pour couvrir au moins des joints des blocs réfractaires (2a), et un réfractaire coulable thermo-isolant léger (3c, 13c) prévu au niveau des espaces entre les blocs thermo-isolants (3a, 13a), empilé sur le réfractaire coulable dense (3b, 13b) et prévu pour encastrer un espace formé par les blocs thermo-isolants (3a, 13a) et le réfractaire coulable dense (3b, 13b),
dans laquelle le réfractaire coulable dense (3b, 13b) présente une densité apparente de 3,0 ou plus à 110 °C,
dans laquelle le réfractaire coulable thermo-isolant léger (3c, 13c) présente une densité apparente de 1,2 ou moins à 110 °C et une conductivité thermique à 1000 °C de 0,7 W/(m·K) ou moins.

2. Structure en couronne (1) selon la revendication 1,
dans laquelle le bloc thermo-isolant (3a, 13a) présente une forme plane plus petite que le bloc réfractaire (2a), disposé à chaque surface extérieure du bloc réfractaire (2a), et le réfractaire dense est formé par liaison entre les blocs thermo-isolants (3a, 13a).

3. Structure en couronne (1) selon la revendication 1,
dans laquelle le réfractaire coulable dense (3b, 13b) est formé sur toute une surface des surfaces extérieures des blocs réfractaires (2a), les plusieurs blocs thermo-isolants (3a, 13a) sont disposés en laissant un espace entre eux sur la couche réfractaire coulable dense (3b, 13b).

4. Structure en couronne (1) selon l'une quelconque des revendications 1 à 3, dans laquelle le bloc réfractaire (2a) est un bloc de briques électrofondues.

5. Structure en couronne (1) selon l'une quelconque des revendications 1 à 4,
dans laquelle le bloc thermo-isolant (3a, 13a) est un bloc thermo-isolant (3a, 13a) obtenu en moulant à l'avance le réfractaire coulable thermo-isolant léger.

6. Structure en couronne (1) selon l'une quelconque des revendications 1 à 4,
dans laquelle le bloc thermo-isolant (3a, 13a) est un bloc thermo-isolant (3a, 13a) formé en appliquant à la spatule le réfractaire coulable thermo-isolant léger sur une surface des blocs réfractaires (2a) ou la couche réfractaire coulable dense (3b, 13b).

7. Structure en couronne (1) selon l'une quelconque des revendications 1 à 6,
dans laquelle le bloc thermo-isolant (3a, 13a) est constitué d'un réfractaire coulable thermo-isolant léger en alumine-zircone.

8. Structure en couronne (1) selon la revendication 7,
dans laquelle une densité apparente à 110 °C du bloc thermo-isolant (3a, 13a) est de 1,2 ou moins et la conductivité thermique à 1000 °C est de 0,7 W/(m·K) ou moins.

9. Structure en couronne (1) selon l'une quelconque des revendications 1 à 8,
dans laquelle le réfractaire coulable dense (3b, 13b) est de l'alumine contenant du Al₂O₃ à 85 % en masse ou plus, et la densité apparente à 110 °C est de 3,0 ou plus.

10. Structure en couronne (1) selon l'une quelconque des revendications 1 à 9,
dans laquelle une couche thermo-isolante constituée d'un réfractaire coulable thermo-isolant léger (3c, 13c) en alumine-silice, dont la densité apparente à 110 °C est de 0,6 ou moins, et la conductivité thermique à 500 °C est de 0,2 W/(m·K) ou moins, est maintenue à une couche supérieure de la couche de blocage de fuites de gaz (3, 13).

11. Structure en couronne (1) selon l'une quelconque des revendications 1 à 10,
dans laquelle les blocs thermo-isolants (3a, 13a) sont disposés sur une surface des blocs réfractaires (2a) ou du réfractaire coulable dense (3b, 13b) et, parmi les réfractaires coulables thermo-isolants légers (3c, 13c), sur des parties d'espace des blocs thermo-isolants (3a, 13a) dans un sens longitudinal et/ou dans des parties d'espace aux deux extrémités du bloc thermo-isolant (3a, 13a) dans une partie supérieure dans un sens circonférentiel, le réfractaire coulable thermo-isolant léger (3c, 13c) est construit (construction à chaud) après que la structure en couronne (1) ait été dilatée thermiquement par le chauffage du four de fusion de verre.
